# EUROPÄISCHE PATENTSCHRIFT

(11) **EP 1 068 825 B1**
(45) Veröffentlichungstag und Bekanntmachung des Hinweises auf die Patenterteilung: **21.07.2004**
(21) Anmeldenummer: 00110391.0
(22) Anmeldetag: 16.05.2000
(51) Int. Cl.: A47J 39/02, B65D 81/38

(54) **Speisebox für Speiseverteilung**
Box for dispensing food
Boîte pour la distribution d'aliments

(30) Priorität: 16.07.1999 DE 19932872
(43) Veröffentlichungstag der Anmeldung: 17.01.2001
(73) Patentinhaber: INNOVAT Gesellschaft für Sondermaschinenbau, Mess- und Steuerungstechnik mbH, 77963 Schwanau (DE); Rieber GmbH & Co. KG, 72770 Reutlingen (DE)
(72) Erfinder: Lumpp, Günter, 72770 Reutlingen (DE); Bohnert, Jürgen, 77948 Friesenheim (DE); Arnold, Markus, 79189 Bad Krotzingen (DE)
(74) Vertreter: Wolf, Eckhard, Dr.-Ing.

(56) Entgegenhaltungen:
- DE-A- 3 800 798
- DE-A- 4 015 588
- US-A- 4 982 722
- US-A- 5 440 975

## Beschreibung

Die Erfindung betrifft eine Speisebox für die Speiseverteilung mit einem wärmeisolierenden Außenbehälter, einer in den Außenbehälter einsetzbaren Essschale und einem mit der Essschale thermisch gekoppelten Wärmespeicher nach dem Oberbegriff des Anspruchs 1. Ein derartiger Wärmespeicher ist bereits aus US-A-5 440 975 bekannt.

Speiseboxen dieser Art werden beispielsweise in Krankenhäusern, Altenheimen oder von Speisezubringerdiensten für den Transport von warmen Speisen eingesetzt. Der wärmeisolierte Außenbehälter und der Wärmespeicher haben dabei die Aufgabe, die Speise während des Transports auf der gewünschten Esstemperatur zu halten. Diese Temperatur liegt in der Größenordnung von 65 bis 80 °C. Für den Transport und die Aufbewahrung von Speisen ist es jedoch von Nachteil, wenn sie über längere Zeit warmgehalten werden. Beim langen Warmhalten leidet die Speise qualitativ. Dies rührt daher, daß Geschmacksstoffe, Vitamine unter erhöhter Temperatur abgebaut werden.

Andererseits müssen die Speisen gegart werden. Beim Garprozeß muß eine bestimmte Mindesttemperatur von etwa 85 °C erreicht werden. Für den Garprozeß ist immer eine gewisse Zeit erforderlich. Er ist unbedingt notwendig, um die Speisen genießbar zu machen.

Ausgehend hiervon liegt der Erfindung die Aufgabe zugrunde, eine Speisebox zu entwickeln, mit der es möglich ist, die Qualität der transportierten und warmgehaltenen Speisen zu verbessern.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß die zu einem Bestimmungsort zu transportierende Speise zunächst außerhalb der Speisebox vorgegart und im vorgegarten Zustand in die Speisebox eingebracht wird, daß die vorgegarte Speise in der Speisebox mit Hilfe des Wärmespeichers bei einer Temperatur oberhalb eines Garpunkts von 85 °C fertiggegart und anschließend mit Hilfe des Wärmespeichers bei einer Temperatur unterhalb des Garpunkts bis zum Verbrauch über eine gewisse Zeit warmgehalten wird. Mit diesen Maßnahmen ist es möglich, die Speisebox mit der vorgegarten Speise noch während des Garprozesses zumindest teilweise zu ihrem Bestimmungsort zu transportieren. Damit kann bei definierter Garzeit die Warmhaltezeit der Speise verkürzt und die Qualität der Speise verbessert werden. Um dies zu ermöglichen, wird der als Latentwärmespeicher ausgebildete Wärmespeicher der Speisebox unter Einbringung einer mindestens der freisetzbaren Latentwärme entsprechenden Wärmemenge auf eine Temperatur oberhalb des Garpunkts der Speise aufgeheizt, bevor die vorgegarte Speise eingefüllt wird. Als Latentwärmespeicher wird bevorzugt ein Gemisch aus mindestens zwei Speicherkomponenten verwendet, von denen mindestens eine erste eine Garkomponente bildende Speicherkomponente eine Umwandlungstemperatur oberhalb und mindestens eine zweite, eine Warmehaltekomponente bildende Speicherkomponente eine Umwandlungstemperatur unterhalb eines Garpunkts von 85 °C aufweist. Als besonders vorteilhaft hat es sich erwiesen, wenn die Garkomponente eine Umwandlungstemperatur von 85 bis 130 °C aufweist, während die Warmhaltekomponente eine Umwandlungstemperatur von 60 bis 80 °C aufweisen sollte. Die Speicherkomponenten sollten so ausgewählt werden, daß ihre Latentwärme mindestens 200 kJ/kg aufweist, wobei zweckmäßig ein Phasenübergang von flüssig nach fest auftritt.

Um eine optimale Wärmeübertragung zu gewährleisten, ist es von Vorteil, wenn die Dichte der Garkomponente in festem Zustand größer als im flüssigen Zustand ist. Eine weitere Verbesserung in dieser Hinsicht wird dadurch erzielt, daß die Dichte der Garkomponente in festem Aggregatzustand größer ist als die Dichte der Warmhaltekomponenten in flüssigem Zustand. Dadurch kann sich die Garkomponente beim Auskristallisieren innerhalb des noch teilweise flüssigen Speichermaterials absetzen, wodurch die Wärmeisolierung nach unten und die Wärmeübertragung nach oben in die Speise hinein verbessert wird. Von besonderem Vorteil ist es, wenn die einzelnen Speicherkomponenten ineinander unlöslich sind. In diesem Falle kommt es zu einem definierten kurzzeitigen Übergang zwischen der Gartemperatur und der Warmhaltetemperatur.

Eine bevorzugte Ausgestaltung der Erfindung sieht vor, daß die Garkomponente Erythrit enthält, während die Warmhaltekomponente überwiegend aus Behensäure besteht. Die Garzeit und die maximale Warmhaltezeit können dadurch gesteuert werden, daß das Mischungsverhältnis von Erythrit und Behensäure im Latentwärmespeicher vorzugsweise zwischen 1:3 und 3:1 definiert eingestellt wird. Besonders gute Ergebnisse wurden mit einem Mischungsverhältnis von 1:1 erzielt.

Zur Vermeidung einer Unterkühlung des Latentwärmespeichers im Bereich der Umwandlungstemperatur kann dem Latentwärmespeicher zusätzlich ein Keimbildner zugesetzt werden, der beispielsweise aus CaCO₃ oder aus Dodecandiol besteht. Der Gewichtsanteil des Keimbildners im Latentwärmespeicher beträgt zweckmäßig etwa 0,3 bis 3 %.

Gemäß einer weiteren vorteilhaften Ausgestaltung der Erfindung kann der Latentwärmespeicher ein Paraffingemisch mit variablem Molekulargewicht enthalten, dessen Gemischkomponenten teilweise eine Garkomponente mit einer Umwandlungstemperatur oberhalb 85 °C und teilweise eine Warmhaltekomponente mit einer Umwandlungstemperatur unterhalb 85 °C aufweisen. Die Umwandlungstemperatur des Paraffingemisches weist dabei zweckmäßig einen im wesentlichen stetigen Verlauf zwischen 120 °C und 60 °C, vorzugsweise zwischen 100 °C und 75 °C auf.

Im folgenden wird die Erfindung anhand der Zeichnung näher erläutert. Es zeigen
- Fig. 1: einen Schnitt durch eine Speisebox mit Essschale und in der Essschale integriertem Wärmespeicher;
- Fig. 2: einen Schnitt durch eine Speisebox mit Essschale und separatem Wärmespeicher;
- Fig. 3: ein Meßdiagramm für den zeitabhängigen Temperaturverlauf eines in einer Speisebox angeordneten Latentwärmespeichers aus einem Gemisch aus Erythrit und Behensäure;
- Fig. 4: ein Meßdiagramm entsprechend Fig. 3 für einen Latentwärmespeicher aus einem Paraffingemisch (Kurve 1) und Behensäure (Kurve 2).

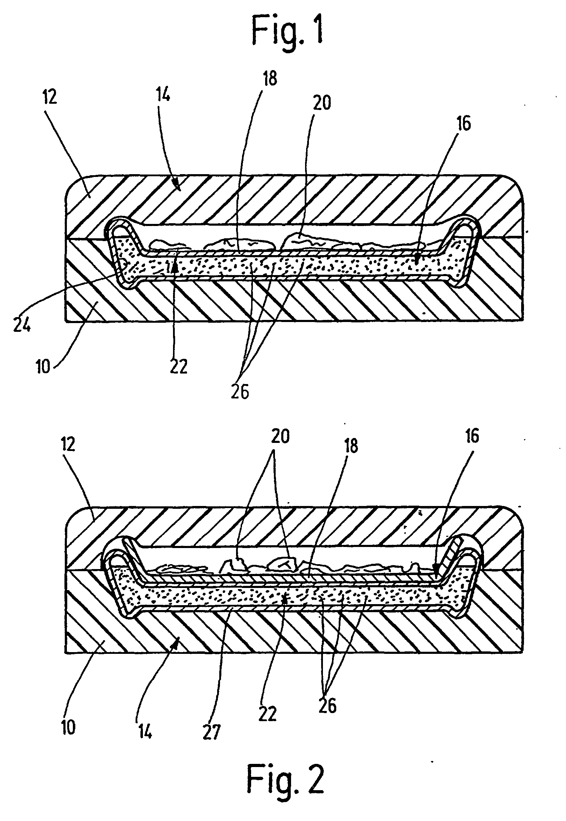

Die in den Fig. 1 und 2 gezeigten Speiseboxen weisen einen aus einem Bodenteil 10 und einem Deckelteil 12 bestehenden wärmeisolierenden Außenbehälter 14, eine Essschale 16 mit einer Speisemulde 18 zur Aufnahme einer Speise 20 und einen Wärmespeicher 22 auf. Bei dem Ausführungsbeispiel nach Fig. 1 weist der Wärmespeicher 22 eine einstückig mit der Essschale 16 verbundene, hermetisch abschließbare Speicherkammer 24 auf, in der das Speichermaterial 26 so angeordnet ist, daß es in unmittelbarem thermischem Kontakt mit der Speisemulde 18 der Essschale 16 steht. Das Ausführungsbeispiel nach Fig. 2 unterscheidet sich vom Ausführungsbeispiel nach Fig. 1 dadurch, daß der Wärmespeicher 22 als von der Essschale 16 getrennte Speicherzelle 27 ausgebildet ist, die eine Speicherkammer 24 zur Aufnahme des Speichermaterials 26 sowie eine Wärmeübertragungsfläche 28 aufweist. Auf die Wärmeübertragungsfläche 28 ist eine separate Essschale 16 unter Herstellung eines thermischen Kontakts aufstellbar.

Der Wärmespeicher 22 ist als Latentwärmespeicher ausgebildet, dessen Speichermaterial 26 aus mehreren Speicherkomponenten mit unterschiedlichen Umwandlungstemperatur besteht. Damit wird erreicht, daß ein Teil der freigegebenen Latentwärme bei einer Temperatur oberhalb eines definierten Garpunkts von 85 °C zum Nachgaren der Speise verwendet werden kann, während ein anderer Teil der freigesetzten Latentwärme bei einer Temperatur unterhalb des Garpunkts zum Warmhalten benutzt wird.

Das in Fig. 1 gezeigte Diagramm wurde aufgenommen für einen Latentwärmespeicher, dessen erste Speicherkomponente aus Erythrit mit einer Umwandlungstemperatur von 110 °C und dessen zweite Speicherkomponente aus Behensäure mit einer Umwandlungstemperatur von ca. 78 °C besteht, in einem Gewichtsverhältnis von 1:1. Dem Gemisch war außerdem ein Keimbildner CaCO₃ mit einem Gewichtsanteil von 1 % beigemischt.

Das in einer Speisebox nach Fig. 1 befindliche Speichermaterial 26 wurde unter Einbringen von Wärme und Aufschmelzen des Speichermaterials auf über 120 °C aufgeheizt und nach dem Aufheizen in den wärmeisolierenden Außenbehälter 14 der Speisebox eingestellt. Die Temperatur wurde mit einem Temperaturfühler am Boden der Speisemulde 18 der Essschale 16 gemessen und in Abhängigkeit von der Zeit aufgezeichnet (Kurve 1). Mit einem weiteren Meßfühler wurde die Raumtemperatur gemessen und zur Aufzeichnung gebracht (Kurve 2).

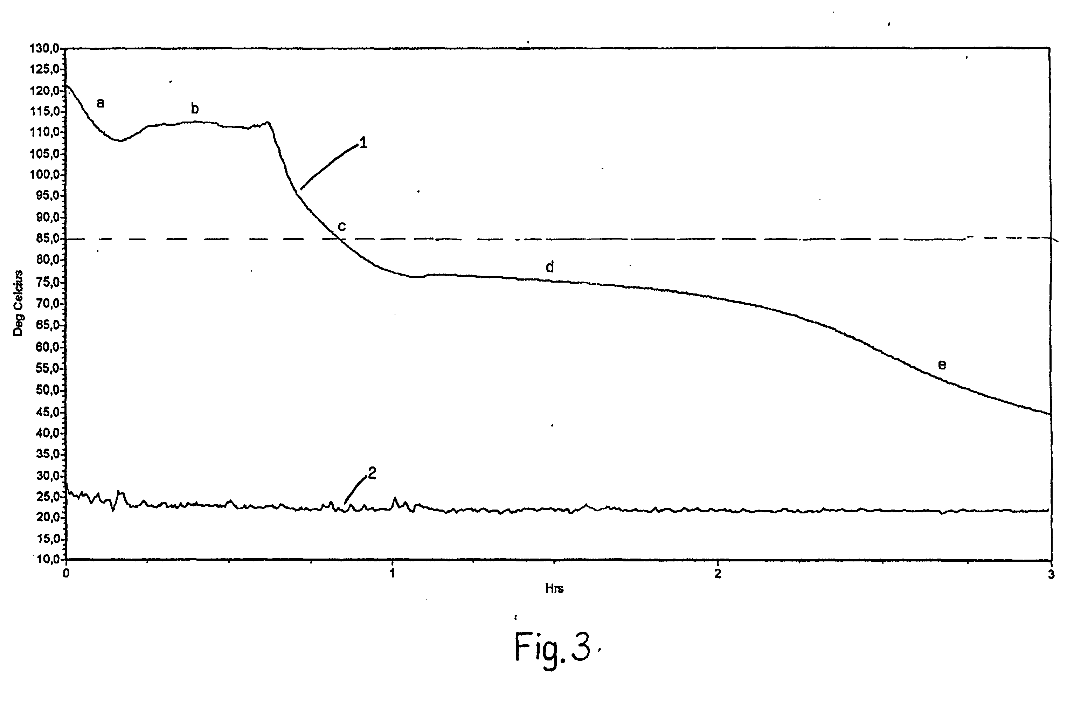

Aus Fig. 3 ist anhand der Meßkurve 1 zu ersehen, daß nach der Abkühlung in dem Kurvenabschnitt a ein rascher Temperaturabfall auf etwa 107 °C erfolgt und daß im Anschluß daran nach einem kurzen Anstieg etwa über 30 Minuten lang ein konstanter Temperaturverlauf bei 110 °C zu verzeichnen ist (Abschnitt b). Nach etwa einer halben Stunde tritt ein erneuter rascher Temperaturabfall von 110 °C auf 74 °C ein (Kurvenabschnitt c), der nach einem kurzen Anstieg in ein mehr als eine Stunde dauerndes Temperaturplateau von etwa 75 °C übergeht (Abschnitt d). Nach etwa 2¼ Stunden nimmt dann die Temperatur etwas schneller in Richtung Umgebungstemperatur ab (Abschnitt e).

Der Kurvenabschnitt a bezieht sich auf eine sensible Abkühlung der Schmelze bis zum Anfang der Auskristallisation des Bestandteils Erythrit. Die Unterkühlung zwischen den Kurven a und b ist auf eine verzögerte Kristallbildung zurückzuführen. Das Plateau im Abschnitt b rührt von der Auskristallisation der Erythrit-Komponente. Das auskristallisierte Erythrit ist schwerer als die verbleibende Schmelze und sinkt zum Behälterboden, so daß der Wärmeübergang im Bereich der Meßstelle nicht geändert wird. Nach vollständigem Auskristallisieren des Erythrits erfolgt eine erneute sensible Abkühlung des Speichermaterials, die rasch unter den Garpunkt von 85 °C absinkt. Bei etwa 75 °C setzt dann die Kristallisation der Behensäure ein, und zwar ebenfalls nach einer kleinen Unterkühlung an der Übergangsstelle zwischen den Kurvenabschnitten c und d. Im Verlauf des Auskristallisierens der Behensäure wächst der Latentspeicher 28 allmählich durch die sich bildenden Kristalle zu, so daß es auch im Bereich der Meßstelle zu einer Änderung des Wärmeübergangs kommt. Dies ist ein Grund dafür, daß das Plateau im Kurvenabschnitt d nicht so scharf ausgeprägt ist wie im Bereich b. Der Übergang zur sensiblen Abkühlung des Festmaterials im Bereich des Kurvenabschnitts e ist deshalb eher glatt.

Die Kurve 2 zeigt, daß die Umgebungstemperatur über die gesamte Meßdauer etwa bei 25 °C lag. Die schwankende Raumtemperatur hatte keinen meßbaren Einfluß auf die Abkühlkurve des Speichermaterials.

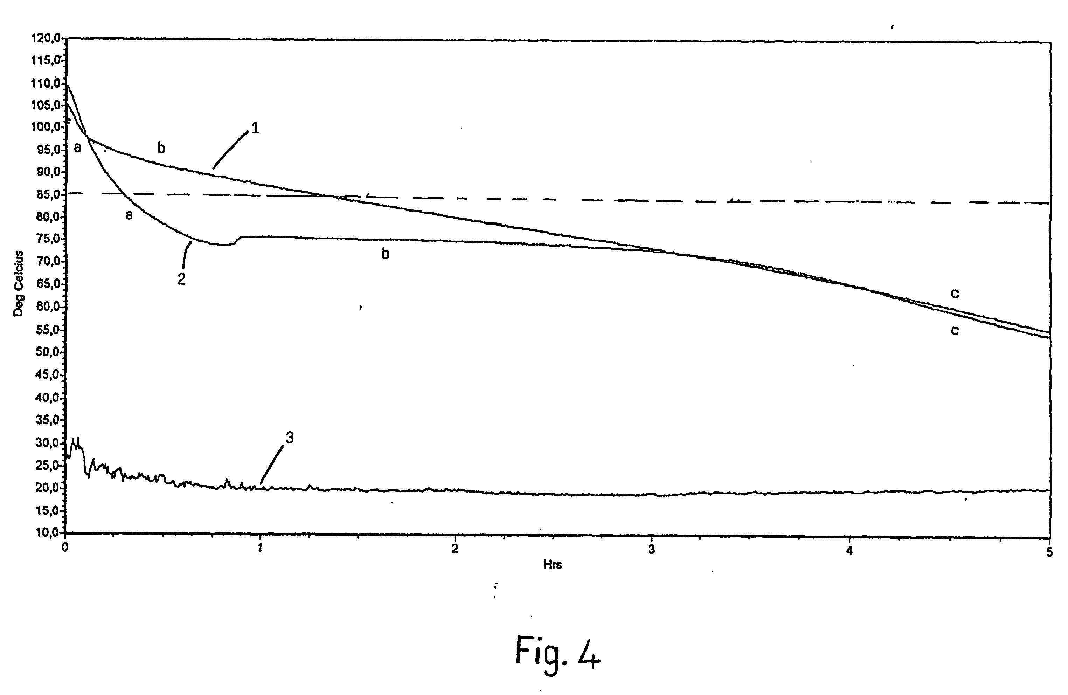

In dem Diagramm nach Fig. 4 zeigt die Meßkurve 1 die Abkühlkurve eines aus einem Paraffingemisch bestehenden Latentwärmespeicher, dessen Mischungskomponenten unterschiedliche Molekulargewichte aufweisen. Um eine leichtere Interpretation des Temperaturverlaufs zu ermöglichen, ist als Vergleichskurve 2 der Temperaturverlauf eines aus Behensäure bestehenden Latentwärmespeichers eingezeichnet. Die Kurve 3 zeigt den Temperaturverlauf der Raumtemperatur über die Meßzeit.

Zur Aufnahme der beiden Meßkurven 1 und 2 wurde die Essschale 16 mit ihrer Speicherkammer 24 etwa 30 Minuten lang auf eine Temperatur oberhalb des Schmelzpunkts des Latentwärmespeichers aufgeheizt, bis das gesamte Speichermaterial geschmolzen war. Nach dem Aufheizen wurde die Speicherkammer 24 in den wärmeisolierenden Außenbehälter 14 der Speisebox eingestellt. Die Temperatur wurde mit einem Temperaturfühler am Boden der Speisemulde 18 der Essschale 16 gemessen und in Abhängigkeit von der Zeit aufgezeichnet.

Bei der Kurve 1 (Paraffingemisch) erfolgt zunächst eine steile Abkühlung bis zum Kristallisationspunkt bei ca. 98 °C. Von da an beginnt die Auskristallisation der Paraffinkomponenten unter Freisetzung der Latentwärme. Der Temperaturabfall über der Zeit wird flacher (Abschnitt b). Der Garpunkt von 85 °C wird nach etwa 1,3 Stunden unterschritten. Im Kurvenabschnitt c erfolgt schließlich die sensible Abkühlung des vollständig erstarrten Speichermaterials.

Die Abkühlkurve 2 der Behensäure zeigt deutlich die zunächst sensible und daher rasche Abkühlung des Speichermaterials im Kurvenzweig a, der nach einer Unterkühlung bei ca. 75 °C übergeht in den Kurvenabschnitt b mit über längere Zeit etwa konstanter Temperatur, der Umwandlungstemperatur der Behensäure. Nach vollständiger Auskristallisation der Behensäure nimmt die Temperatur in dem sensiblen Abschnitt c mit nahezu der gleichen Steigung ab wie im Falle des Paraffins (Kurve 1).

Die Diagramme nach Fig. 3 und 4 (jeweils Kurve 1) zeigen, daß das untersuchte Speichergemisch geeignet ist, um eine in der Essschale befindliche Speise in einer ersten Phase nachzugaren und über eine zweite, längere Phase hinweg warmzuhalten.

Zusammenfassend ist folgendes festzuhalten: Die Erfindung bezieht sich auf eine Speisebox für die Speiseverteilung mit mindestens einem wärmeisolierenden Außenbehälter 14, einer in den Außenbehälter einsetzbaren Essschale 16 und einem mit der Essschale thermisch verbindbaren Wärmespeicher 22. Um eine Qualitätseinbuße während der Verteilung der Speise zu vermeiden, wird gemäß der Erfindung vorgeschlagen, daß der Wärmespeicher 22 als Latentwärmespeicher ausgebildet ist, der aus einem Gemisch aus mindestens zwei Speicherkomponenten besteht, von denen mindestens eine erste Speicherkomponente eine Umwandlungstemperatur oberhalb und mindestens eine zweite Speicherkomponente eine Umwandlungstemperatur unterhalb eines Garpunkts von 85 °C aufweist

## Patentansprüche

1. Speisebox für die Speiseverteilung mit einem wärmeisolierenden Außenbehälter (14), einer in den Außenbehälter einsetzbaren Essschale (16) und einem mit der Essschale thermisch gekoppelten Wärmespeicher, der als Latentwärmespeicher ausgebildet ist, **dadurch gekennzeichnet, daß** der Wärmespeicher aus einem Gemisch aus mindestens zwei Speicherkomponenten besteht, von denen mindestens eine erste Speicherkomponente eine Umwandlungstemperatur oberhalb und mindestens eine zweite Speicherkomponente eine Umwandlungstemperatur unterhalb eines Garpunkts von 85 °C aufweist.

2. Speisebox nach Anspruch 1, **dadurch gekennzeichnet, daß** die erste Speicherkomponente eine Umwandlungstemperatur von 85 bis 130 °C aufweist.

3. Speisebox nach Anspruch 1 oder 2, **dadurch gekennzeichnet, daß** die zweite Speicherkomponente eine Umwandlungstemperatur von 60 bis 80 °C aufweist.

4. Speisebox nach einem der Ansprüche 1 bis 3, **dadurch gekennzeichnet, daß** das Speichermaterial eine Latentwärme von mindestens 150 kJ/kg aufweist.

5. Speisebox nach einem der Ansprüche 1 bis 4, **dadurch gekennzeichnet, daß** die Dichte der festen Speicherkomponente größer als die der zugehörigen flüssigen Speicherkomponente ist.

6. Speisebox nach einem der Ansprüche 1 bis 5, **dadurch gekennzeichnet, daß** die Dichte der ersten Speicherkomponente im festen Aggregatzustand größer ist als die Dichte der zweiten Speicherkomponente im flüssigen Aggregatzustand.

7. Speisebox nach einem der Ansprüche 1 bis 6, **dadurch gekennzeichnet, daß** die erste Speicherkomponente in der zweiten Speicherkomponente unlöslich ist.

8. Speisebox nach einem der Ansprüche 1 bis 7, **dadurch gekennzeichnet, daß** die erste Speicherkomponente Erythrit enthält.

9. Speisebox nach einem der Ansprüche 1 bis 8, **dadurch gekennzeichnet, daß** die zweite Speicherkomponente Behensäure enthält.

10. Speisebox nach den Ansprüchen 8 und 9, **dadurch gekennzeichnet, daß** der Latentwärmespeicher Erythrit und Behensäure in einem Gewichtsverhältnis von 1:3 bis 3:1, vorzugsweise von 1:1 enthält.

11. Speisebox nach einem der Ansprüche 1 bis 10, **dadurch gekennzeichnet, daß** dem Latentwärmespeicher zusätzlich ein Keimbildner zugesetzt ist.

12. Speisebox nach Anspruch 11, **dadurch gekennzeichnet, daß** der Keimbildner aus CaCO₃ besteht.

13. Speisebox nach Anspruch 11, **dadurch gekennzeichnet, daß** der Keimbildner aus Dodecandiol besteht.

14. Speisebox nach einem der Ansprüche 11 bis 13, **dadurch gekennzeichnet, daß** der Gewichtsanteil des Keimbildners im Latentwärmespeicher 0,3 bis 3 % beträgt.

15. Speisebox nach einem der Ansprüche 1 bis 7, **dadurch gekennzeichnet, daß** der Latentwärmespeicher als Wachsgemisch, vorzugsweise als Paraffingemisch bestehend aus mindestens einer ersten Mischungskomponente mit einer Schmelztemperatur oberhalb 85 °C und aus mindestens einer zweiten Mischungskomponente mit einer Schmelztemperatur unterhalb 85 °C ausgebildet ist.

16. Speisebox nach Anspruch 15, **dadurch gekennzeichnet, daß** die erste Mischungskomponente im festen Aggregatzustand eine größere Dichte aufweist als die zweite Mischungskomponente im flüssigen Aggregatzustand.

17. Speisebox nach Anspruch 15 oder 16, **dadurch gekennzeichnet, daß** die Schmelztemperatur der Mischungskomponenten des Wachs- oder Paraffingemisches einen im wesentlichen stetigen Temperaturverlauf zwischen 120 und 60 °C, vorzugsweise zwischen 100 und 75 °C aufweist.

18. Mischung zur Speicherung von latenter Wärme, **gekennzeichnet durch** mindestens eine erste, als Garkomponente ausgebildete Speicherkomponente mit einer Umwandlungstemperatur oberhalb eines Garpunkts von 85 °C und einer als Warmhaltekomponente ausgebildeten Speicherkomponente mit einer Umwandlungstemperatur unterhalb des Garpunkts.

19. Mischung nach Anspruch 18, **dadurch gekennzeichnet, daß** die Garkomponente eine Umwandlungstemperatur von 85 bis 130 °C aufweist.

20. Mischung nach Anspruch 18 oder 19, **dadurch gekennzeichnet, daß** die Warmhaltekomponente eine Umwandlungstemperatur von 60 bis 80 °C aufweist.

21. Mischung nach einem der Ansprüche 18 bis 20, **dadurch gekennzeichnet, daß** die Dichte der festen Garkomponente größer ist als die der flüssigen Garkomponente.

22. Mischung nach einem der Ansprüche 18 bis 21, **dadurch gekennzeichnet, daß** die Dichte der Garkomponente im festen Aggregatzustand größer ist als die Dichte der flüssigen Warmhaltekomponente.

23. Mischung nach einem der Ansprüche 18 bis 22, **dadurch gekennzeichnet, daß** die Garkomponente in der Warmhaltekomponente unlöslich ist.

24. Mischung nach einem der Ansprüche 18 bis 23, **dadurch gekennzeichnet, daß** die Garkomponente Erythrit enthält.

25. Mischung nach einem der Ansprüche 18 bis 24, **dadurch gekennzeichnet, daß** die Warmhaltekomponente Behensäure enthält.

26. Mischung nach den Ansprüchen 8 und 9, **dadurch gekennzeichnet, daß** der Latentwärmespeicher Erythrit und Behensäure in einem Mischungsverhältnis von 1:3 bis 3:1, vorzugsweise von 1:1 enthält.

27. Mischung nach einem der Ansprüche 18 bis 26, **gekennzeichnet durch** einen zusätzlichen Keimbildner.

28. Mischung nach Anspruch 27, **dadurch gekennzeichnet, daß** der Keimbildner aus CaCO₃ besteht.

29. Mischung nach Anspruch 27, **dadurch gekennzeichnet, daß** der Keimbildner aus Dodecandiol besteht.

30. Mischung nach einem der Ansprüche 27 bis 29, **dadurch gekennzeichnet, daß** der Gewichtsanteil des Keimbildners 0,3 bis 3 % beträgt.

31. Mischung nach einem der Ansprüche 18 bis 23, **gekennzeichnet durch** ein vorzugsweise als Paraffingemisch ausgebildetes Wachsgemisch, bestehend aus Garkomponenten mit einer Umwandlungstemperatur oberhalb 85 °C und aus Warmhaltekomponenten mit einer Umwandlungstemperatur unterhalb 85 °C.

32. Mischung nach Anspruch 31, **dadurch gekennzeichnet, daß** die Garkomponenten im festen Aggregatzustand eine größere Dichte aufweisen als die Warmhaltekomponenten im flüssigen Aggregatzustand.

33. Mischung nach Anspruch 31 oder 32, **dadurch gekennzeichnet, daß** die Schmelztemperatur des Wachs- oder Paraffingemischs einen im wesentlichen stetigen Verlauf zwischen 120 °C und 60 °C, vorzugsweise zwischen 100 °C und 75 °C aufweist.

34. Verfahren zum Garen und Warmhalten von Speisen, die unter Verwendung von Speiseboxen nach einem der Ansprüche 1-17 mit einem Wärmespeicher nach einem der Ansprüche 18-33 zur Verteilung gebracht werden, **dadurch gekennzeichnet, daß** die Speise zunächst außerhalb der Speisebox vorgegart wird und sodann im vorgegarten Zustand in die Speisebox eingebracht wird, daß die vorgegarte Speise in der Speisebox mit Hilfe des Wärmespeichers bei einer Temperatur oberhalb eines Garpunkts von 85 °C fertiggegart wird und anschließend mit Hilfe des Wärmespeichers bei einer Temperatur unterhalb des Garpunkts über eine gewisse Zeit warmgehalten wird.

35. Verfahren nach Anspruch 34, **dadurch gekennzeichnet, daß** die Speisebox mit der vorgegarten Speise während des Garprozesses zu einem Bestimmungsort transportiert wird.

36. Verfahren nach Anspruch 34 oder 35, **dadurch gekennzeichnet, daß** der als Latentwärmespeicher ausgebildete Wärmespeicher vor dem Einfüllen der vorgegarten Speise unter Einbringung einer mindestens der freisetzbaren Latentwärme entsprechenden Wärmemenge auf eine Temperatur oberhalb des Garpunkts aufgeheizt wird.

37. Verfahren nach Anspruch 36, **dadurch gekennzeichnet, daß** ein Latentwärmespeicher mit mindestens zwei Speicherkomponenten verwendet wird, von denen mindestens eine erste Speicherkomponente eine Umwandlungstemperatur oberhalb und mindestens eine zweite Speicherkomponente eine Umwandlungstemperatur unterhalb eines Garpunkts von 85 °C aufweist.

## Claims

1. Food box for food distribution having a thermally insulating external container (14), an eating dish (16) insertable into the external container and a heat storer that can be coupled thermally to the eating dish that is formed as a latent-heat storer, **characterized in that** it consists of a mixture of at least two storer components of which at least a first storer component has a transition temperature above a cooking point of 85°C and at least a second storer component has a transition temperature below a cooking point of 85°C.

2. Food box according to Claim 1, **characterized in that** the first storer component has a transition temperature of 85 to 130°C.

3. Food box according to Claim 1 or 2, **characterized in that** the second storer component has a transition temperature of 60 to 80°C.

4. Food box according to any one of Claims 1 to 3, **characterized in that** the storer material has a latent heat of at least 150 kJ/kg.

5. Food box according to any one of Claims 1 to 4, **characterized in that** the density of the solid storer component is greater than that of the associated liquid storer component.

6. Food box according to any one of Claims 1 to 5, **characterized in that** the density of the first storer component in the solid aggregate state is greater than the density of the second storer component in the liquid aggregate state.

7. Food box according to any one of Claims 1 to 6, **characterized in that** the first storer component is insoluble in the second storer component.

8. Food box according to any one of Claims 1 to 7, **characterized in that** the first storer component contains erythritol.

9. Food box according to any one of Claims 1 to 8, **characterized in that** the second storer component contains behenic acid.

10. Food box according to Claims 8 and 9, **characterized in that** the latent-heat storer contains erythritol and behenic acid in a ratio by weight of 1:3 to 3:1, preferably of 1:1.

11. Food box according to any one of Claims 1 to 10, **characterized in that** a nucleating agent is additionally added to the latent-heat storer.

12. Food box according to Claim 11, **characterized in that** the nucleating agent consists of CaCO₃.

13. Food box according to Claim 11, **characterized in that** the nucleating agent consists of dodecanediol.

14. Food box according to any one of Claims 11 to 13, **characterized in that** the proportion by weight of the nucleating agent in the latent-heat storer is 0.3 to 3%.

15. Food box according to any one of Claims 1 to 7, **characterized in that** the latent-heat storer is formed as a wax mixture, preferably as a paraffin mixture consisting of at least a first mixture component having a melting point above 85°C and of at least a second mixture component having a melting point below 85°C.

16. Food box according to Claim 15, **characterized in that** the first mixture component has, in the solid aggregate state, a higher density than the second mixture component has in the liquid aggregate state.

17. Food box according to Claim 15 or 16, **characterized in that** the melting point of the mixture components of the wax mixture or paraffin mixture has an essentially continuous temperature curve between 120 and 60°C, preferably between 100 and 75°C.

18. Mixture for storing latent heat, **characterized by** at least a first storer component formed as a cooking component and having a transition temperature above a cooking point of 85°C and a storer component formed as a temperature-maintaining component and having a transition temperature below the cooking point.

19. Mixture according to Claim 18, **characterized in that** the cooking component has a transition temperature of 85 to 130°C.

20. Mixture according to Claim 18 or 19, **characterized in that** the temperature-maintaining component has a transition temperature of 60 to 80°C.

21. Mixture according to any one of Claims 18 to 20, **characterized in that** the density of the solid cooking component is greater than that of the liquid cooking component.

22. Mixture according to any one of Claims 18 to 21, **characterized in that** the density of the cooking component in the solid aggregate state is greater than the density of the liquid temperature-maintaining component.

23. Mixture according to any one of Claims 18 to 22, **characterized in that** the cooking component is insoluble in the temperature-maintaining component.

24. Mixture according to any one of Claims 18 to 23, **characterized in that** the cooking component contains erythritol.

25. Mixture according to any one of Claims 18 to 24, **characterized in that** the temperature-maintaining component contains behenic acid.

26. Mixture according to Claims 8 and 9, **characterized in that** the latent-heat storer contains erythritol and behenic acid in a mixing ratio of 1:3 to 3:1, preferably 1:1.

27. Mixture according to any one of Claims 18 to 26, **characterized by** an additional nucleating agent.

28. Mixture according to Claim 27, **characterized in that** the nucleating agent consists of CaCO₃.

29. Mixture according to Claim 27, **characterized in that** the nucleating agent consists of dodecanediol.

30. Mixture according to any one of Claims 27 to 29, **characterized in that** the proportion by weight of the nucleating agent is 0.3 to 3%.

31. Mixture according to any one of Claims 18 to 23, **characterized by** a wax mixture preferably formed as a paraffin mixture and consisting of cooking components having a transition temperature above 85°C and temperature-maintaining components having a transition temperature below 85°C.

32. Mixture according to Claim 31, **characterized in that** the cooking components have a greater density in the solid aggregate state than the temperature-maintaining components in the liquid aggregate state.

33. Mixture according to Claim 31 or 32, **characterized in that** the melting point of the wax mixture or paraffin mixture has an essentially continuous curve between 120°C and 60°C, preferably between 100°C and 75°C.

34. Method of cooking and keeping foods hot that are distributed using food boxes according to any one of Claims 1-17 in a heat storer according to any one of Claims 18-33, **characterized in that** the food is first precooked outside the food box and then introduced in the precooked state into the food box and **in that** the precooked food is fully cooked in the food box with the aid of the heat storer at a temperature above a cooking point of 85°C and is then kept hot for a certain time at a temperature below the cooking point with the aid of the heat storer.

35. Method according to Claim 34, **characterized in that** the food box is transported with the precooked food during the cooking process to a destination.

36. Method according to Claim 34 or 35, **characterized in that** the heat storer formed as a latent-heat storer is heated to a temperature above the cooking point with the introduction of an amount of heat corresponding at least to the releasable latent heat before filling with the precooked food.

37. Method according to Claim 36, **characterized in that** a latent-heat storer is used that has at least two storer components of which at least a first storer component has a transition temperature above a cooking point of 85°C and at least a second storer component has a transition temperature below a cooking point of 85°C.

## Revendications

1. Boîte à aliments, pour la distribution d'aliments, avec un réservoir extérieur (14) isolé de la chaleur, une coupelle (16) insérable dans le réservoir extérieur, et un accumulateur de chaleur, couplé thermiquement à la coupelle et réalisé sous la forme d'accumulateur de chaleur latente, **caractérisée en ce que** l'accumulateur de chaleur est formé d'un mélange composé d'au moins deux composants accumulateurs, dont au moins un premier composant accumulateur présente une température de conversion ou température de transformation supérieure à, et au moins un deuxième composant accumulateur présente une température de conversion ou température de transformation inférieure à un point de cuisson de 85°C.

2. Boîte à aliments selon la revendication 1, **caractérisée en ce que** le premier composant accumulateur présente une température de conversion dans la plage de 85 à 130°C.

3. Boîte à aliments selon la revendication 1 ou 2, **caractérisée en ce que** le deuxième composant accumulateur présente une température de conversion comprise dans la plage de 60 à 80°C.

4. Boîte à aliments selon l'une des revendications 1 à 3, **caractérisée en ce que** le matériau accumulateur présente une chaleur latente d'au moins 150 kJ/kg.

5. Boîte à aliments selon l'une des revendications 1 à 4, **caractérisée en ce que** la masse volumique du composant accumulateur solide est supérieure à celle du composant accumulateur liquide associé.

6. Boîte à aliments selon l'une des revendications 1 à 5, **caractérisée en ce que** la masse volumique du premier composant accumulateur, à l'état d'agrégat solide, est supérieure à la masse volumique du deuxième composant accumulateur à l'état d'agrégat liquide.

7. Boîte à aliments selon l'une des revendications 1 à 6, **caractérisée en ce que** le premier composant accumulateur est insoluble dans le deuxième composant accumulateur.

8. Boîte à aliments selon l'une des revendications 1 à 7, **caractérisée en ce que** le premier composant accumulateur contient de l'érythrite.

9. Boîte à aliments selon l'une des revendications 1 à 8, **caractérisée en ce que** le deuxième composant accumulateur contient de l'acide de Ben.

10. Boîte à aliments selon les revendications 8 et 9, **caractérisée en ce que** l'accumulateur de chaleur latente contient de l'érythrite et de l'acide de Ben, dans un rapport de poids compris entre 1:3 à 3:1, de préférence, de 1:1.

11. Boîte à aliments selon l'une des revendications 1 à 10, **caractérisée en ce qu'**à l'accumulateur de chaleur est, en plus, ajouté un agent de germination.

12. Boîte à aliments selon la revendication 11, **caractérisée en ce que** l'agent de germination est composé de CaCO₃.

13. Boite à aliments selon la revendication 11, **caractérisée en ce que** l'agent de germination est composé de dodécandiol.

14. Boîte à aliments selon l'une des revendications 11 à 13, **caractérisée en ce que** la proportion en poids de l'agent de germination dans l'accumulateur de chaleur latente est de 0,3 à 3 %.

15. Boîte à aliments selon l'une des revendications 1 à 7, **caractérisée en ce que** l'accumulateur de chaleur latente est réalisé sous la forme de mélange de cirés, de préférence sous la forme de mélange de paraffines, composé d'au moins un premier composant de mélange, ayant une température de fusion supérieure à 85°C et d'au moins un deuxième composant de mélange ayant une température de fusion inférieure à 85°C.

16. Boîte à aliments selon la revendication 15, **caractérisée en ce que** le premier composant de mélange, à l'état d'agrégat solide, présente une masse volumique supérieure au deuxième composant de mélange, à l'état d'agrégat liquide.

17. Boîte à aliments selon la revendication 15 ou 16, **caractérisée en ce que** la température de fusion des composants de mélange, du mélange de cires ou de paraffines, présente une allure de température sensiblement continue, entre 120 et 60°C, de préférence, entre 100 et 75°C.

18. Mélange pour le stockage de chaleur latente, **caractérisé par** au moins un premier composant accumulateur, réalisé sous la forme de composant de cuisson, avec une température de conversion supérieure à un point de cuisson de 85°C, et un composant accumulateur, réalisé sous la forme de composant de maintien de la chaleur, ayant une température de conversion inférieure au point de cuisson.

19. Mélange selon la revendication 18, **caractérisé en ce que** le composant de cuisson présente une température de conversion dans la plage de 85 à 130°C.

20. Mélange selon la revendication 18 ou 19, **caractérisé en ce que** le composant de maintien de la chaleur présente une température de conversion dans la plage de 60 à 80°C.

21. Mélange selon l'une des revendications 18 à 20, **caractérisé en ce que** la masse volumique du composant de cuisson solide est supérieure à celle du composant de cuisson liquide.

22. Mélange selon l'une des revendications 18 à 21, **caractérisé en ce que** la masse volumique du composant de cuisson, à l'état d'agrégat solide, est supérieure à la masse volumique du composant de maintien de la chaleur liquide.

23. Mélange selon l'une des revendications 18 à 22, **caractérisé en ce que** le composant de cuisson est insoluble dans le composant de maintien de la chaleur.

24. Mélange selon l'une des revendications 18 à 23, **caractérisé en ce que** le composant de cuisson contient de l'érythrite.

25. Mélange selon l'une des revendications 18 à 24, **caractérisé en ce que** le composant de maintien de la chaleur contient de l'acide de Ben.

26. Mélange selon les revendications 8 et 9, **caractérisé en ce que** l'accumulateur de chaleur latente contient de l'érythrite et de l'acide de Ben, dans un rapport de mélange de 1:3 à 3:1, de préférence, de 1:1.

27. Mélange selon l'une des revendications 18 à 26, **caractérisé par** un agent de germination supplémentaire.

28. Mélange selon la revendication 27, **caractérisé en ce que** l'agent de germination est formé de CaCO₃.

29. Mélange selon la revendication 27, **caractérisé en ce que** l'agent de germination est formé de dodécandiol.

30. Mélange selon l'une des revendications 27 à 29, **caractérisé en ce que** la proportion en poids de l'agent de germination est dans la plage de 0,3 à 3 %.

31. Mélange selon l'une des revendications 18 à 23, **caractérisé par** un mélange de cires, réalisé de préférence sous la forme de mélange de paraffines, composé de composants de cuisson, ayant une température de conversion supérieure à 85°C, et de composants de maintien de chaleur, ayant une température de conversion inférieure à 85°C.

32. Mélange selon la revendication 31, **caractérisé en ce que** les composants de germination, à l'état d'agrégat solide, présentent une masse volumique supérieure à celle des composants de maintien de la chaleur, à l'état d'agrégat liquide.

33. Mélange selon la revendication 31 ou 32, **caractérisé en ce que** la température de fusion du mélange de cires ou de paraffines présente une allure sensiblement continue entre 120°C et 60°C, de préférence entre 100°C et 75°C.

34. Procédé de cuisson et de maintien à température d'aliments, mis en distribution en utilisant des boîtes de distribution d'alimentation, selon l'une des revendications 1 à 17, avec un accumulateur de chaleur selon l'une des revendications 18 à 33, **caractérisé en ce que** les aliments sont d'abord précuits à l'extérieur de la boîte à aliments, puis introduits dans la boîte à aliments à l'état précuit, **en ce que** l'aliment précuit, se trouvant dans la boîte de distribution d'aliments, subit une cuisson de finition à l'aide de l'accumulateur de chaleur, à une température supérieure à un point de cuisson de 85°C, et est ensuite maintenu à la température, pendant une certaine durée, à l'aide de l'accumulateur de chaleur, à une température inférieure au point de cuisson.

35. Procédé selon la revendication 34, **caractérisé en ce que** la boîte de distribution d'aliments, comprenant l'aliment précuit, est transportée à un site de destination pendant le processus de cuisson.

36. Procédé selon la revendication 34 ou 35, **caractérisé en ce que** l'accumulateur de chaleur, réalisé sous la forme d'accumulateur de chaleur latente, avant le remplissage par l'aliment précuit, est chauffé à une température supérieure à la température de cuisson, avec introduction d'une quantité de chaleur correspondant au moins à la quantité de chaleur latente pouvant être dégagée.

37. Procédé selon la revendication 36, **caractérisé en ce qu'**on utilise un accumulateur de chaleur latente, comprenant au moins deux composants accumulateurs, dont au moins un premier composant accumulateur présente une température de conversion supérieure à, et au moins un deuxième composant accumulateur présente une température de conversion inférieure à un point de cuisson de 85°C.
